# EUROPEAN PATENT APPLICATION

(11) **EP 1 970 392 A1**
(43) Date of publication of application: **17.09.2008**
(21) Application number: 08003855.7
(22) Date of filing: 01.03.2008
(51) Int. Cl.: C08G 18/18, C08G 18/48, C08G 18/32, C08G 18/65, C08G 18/66, C08G 18/76

(54) **Water-blown polyurethane foams and a process for their production**

(30) Priority: 15.03.2007 US 724439
(71) Applicant: Bayer MaterialScience LLC, Pittsburgh, PA 15205 (US)
(72) Inventor: Lee, Bin, Coraopolis, PA 15108-3257 (US); Mitesser, Richard W., Pittsburgh, PA 15209-2541 (US)
(74) Representative: Feldhues, Michael L.F.

(57) **Abstract**

Water-blown polyurethane foams are made by reacting a polyisocyanate with a polyol component which includes at least one polyether polyol in the presence of water and a modified, non-fugitive amine catalyst.

## Description

### BACKGROUND OF THE INVENTION

This invention relates to water-blown polyurethane foams produced with a non-fugitive catalyst and to a process for their production. Water-blown polyurethane foams are known and used for a wide variety of applications. Amine catalysts are among the most commonly used catalysts in systems for the production of water-blown foams. Such catalysts are not, however, always desirable because the odor of the amine catalysts which are typically used in such systems remains in the polyurethane foam after formation. This odor limits the use of polyurethane foams for many applications.

It would therefore be advantageous to develop a water-blown polyurethane foam produced with an effective catalyst that did not leave an undesirable odor and was not potentially "fugitive" in the product foam.

### SUMMARY OF THE INVENTION

It is an object of the present invention to provide a water-blown polyurethane foam which has little or no odor due to amine catalyst residue.

It is also an object of the present invention to provide a process for the production of low VOC water-blown polyurethane foams with a non-fugitive catalyst.

These and other objects which will be apparent to those skilled in the art are accomplished by reacting a polyisocyanate or mixture of polyisocyanates with a polyol component in which at least 60% by weight of the total polyol mixture is a polyether polyol in the presence of water in an amount of from about 1 to about 9% weight (based on total weight of polyol component) and from about 0.5 to about 8% by weight (based on total weight of the polyol component) is a modified amine catalyst to form a polyurethane foam.

### DETAILED DESCRIPTION OF THE

### PREFERRED EMBODIMENTS OF THE INVENTION

The present invention provides a semi-rigid polyurethane foam characterized by good cold formability, its ability to provide sufficient support for automobile parts such as headliners, its low density (approximately 20 to 35 kg/m³), good cohesion, low VOCs and which has no noticeable amine odor.

This combination of properties is achieved by reacting a polyisocyanate or mixture of polyisocyanates with a polyol component in the presence of water and a modified amine catalyst.

More specifically, in the process of the present invention, open-celled, cold-formable semi-rigid polyurethane foams are obtained by reacting the polyisocyanate with a polyol component which includes a polyether polyol leaving a functionality of from about 2 to about 6 (preferably at least 60% by weight, more preferably from 60 to 95% by weight, based on total weight of polyol, polyether polyol containing at least two hydroxyl groups and having a molecular weight of from about 160 to about 6000), a chain extending agent and/or crosslinking agent containing at least two hydroxyl groups and having a molecular weight of from 60 to 160, water, a modified amine catalyst and a foam stabilizer.

The polyisocyanate employed in the process of the present invention may be any of the known polyisocyanates, but is preferably diphenyl methane diisocyanate, polyphenyl polymethylene polyisocyanate or a mixture of diphenyl methane diisocyanates and polyphenyl polymethylene polyisocyanates. Particularly preferred are mixtures of diphenyl methane diisocyanates and polyphenyl polymethylene polyisocyanates in which from about 30 to about 80% by weight of the total polyisocyanate is a diphenyl methane diisocyanate and from about 20 to about 70% of the total polyisocyanate is a polyphenyl polymethylene polyisocyanate. Mixtures composed of from about 10 to about 30% by weight of the diphenyl methane diisocyanate is 2,4'-diphenyl methane diisocyanate are more preferred. A diisocyanate mixture in which from about 15 to about 25% by weight of the diphenyl methane diisocyanate is 2,4'-diphenyl methane diisocyanate is most preferred.

The polyol component of the present invention is composed of a polyether polyol having a functionality of from about 2 to about 6. Preferably, the polyol component includes at least 60% by weight of a polyether polyol, more preferably, from about 60 to about 95% by weight, most preferably, from about 70 to about 90% by weight of a difunctional, trifunctional or mixture of di- and tri-functional hydroxyl polyethers having an OH number of from about 28 to about 1050 (these OH numbers correspond to a molecular weight of from about 160 to about 6,000 determined by the end group analysis method).

The polyol component of the present invention may also include up to 40% by weight, preferably up to 25% by weight, most preferably, up to 10% by weight, based on total weight of polyol, of other types of polyols such as polyester polyols. The use of such polyester polyols is not, however, preferred.

Examples of difunctional hydroxyl polyethers having an OH number of from about 28 to about 600 which may be used in the polyol component of the present invention include the difunctional polyethers obtainable by reaction of ethylene oxide and/or propylene oxide with glycols such as ethylene glycol, diethylene glycol, 1,2- or 1,3-propylene glycol, butane-1,4-diol, etc. Polypropylene oxides and/or polyethylene oxides having an OH number in the specified range, preferably in the range of from about 147 to about 560 (corresponding to a molecular weight of from about 200 to about 763 as determined by the end group analysis technique) are examples of other suitable difunctional polyethers. These short chained polyethers are preferably used in quantities of from about 15 to about 35% by weight, based on the total polyol component.

Trifunctional hydroxyl polyethers having an OH number of from about 28 to about 1050 which may be employed in the polyol component of the present invention include the trifunctional polyethers obtainable by reaction of ethylene oxide or propylene oxide with trihydric alcohols such as glycerol, trimethylol propane, monoethanolamine, triethanolamine, sucrose/propylene, glycol/water, etc. These polyethers generally have an OH value of 28 to 1050 which corresponds to a molecular weight of from about 160 to about 6,000 as determined by the end group analysis method.

A preferred mixture of difunctional and trifunctional hydroxyl polyethers is composed of from about 30 to about 50% by weight, based on the total polyol component of a short chained polypropylene oxide glycerine polyether having an OH number in the range of from about 450 to about 600 with from about 25 to about 40% by weight, based on the total polyol component of a long chain poly(propylene/ethylene oxide) glycerine polyether having an OH number in the range of from about 28 to about 34. Polyethers of the latter type also include filler-containing polyethers which contain approximately 20% by weight of a solid styrene/acrylonitrile copolymer grafted on or approximately 20% by weight of a solid reaction product of toluene diisocyanate (TDI) and hydrazine in dispersed form.

The blowing agent used to produce the foams of the present invention is water, optionally, in combination with any of the other known blowing agents such as hydrocarbons, hydrofluorocarbons and hydrochlorofluorocarbons. The water is included in the polyurethane foam-forming reaction mixture in an amount of from about 1 to about 9% by weight, preferably, from about 2.5 to about 7% by weight, most preferably, from about 3 to about 6% by weight, based on total weight of the polyol component. If any of the other known blowing agents are included, such other blowing agent should not be employed in an amount greater than 2% by weight. It is preferred that water be the sole blowing agent used in the polyurethane foam-forming mixtures of the present invention. Water is generally included as a blowing agent in the polyol component.

Optionally, from about 0.05 to about 2% by weight, preferably, from about 0.1 to about 0.7% of the total polyol component of a foam stabilizer may be included in the foam-forming mixtures of the present invention. Any of the known foam stabilizers is suitable. The silicone foam stabilizers are preferred. The stabilizers which may optionally be included in the polyol component of the present invention are known and are preferably of the type having a relatively short polyether group and a relatively long silicone group.

A key feature of the present invention is the modified amine catalyst. The modified amine catalyst must be included in the foam-forming mixture in an amount of from about 0.5 to about 8% by weight, preferably, from about 1 to about 5% by weight, most preferably, from about 2 to about 4% by weight, based on total weight of the polyol component.

The modified amine catalyst employed in the practice of the present invention is the reaction product of (1) an amine, preferably, an amine having at least two amino groups, with at least one of those amino groups being a tertiary amino group with (2) an oil, preferably a bio-based oil or a derivative thereof having a molecular weight of at least 500 to 800. Preferred modified amine catalysts useful in the practice of the present include the reaction products of(1) amines such as those represented by the formula R₂-N-R'ₓ-NH₂ where R and R' each represents a hydrocarbon and x represents an integer, such as N,N-dimethyl-propylene diamine with (2) an oil such as castor oil or any fatty acid, and preferably, tall oil. Particularly preferred are the reaction products of N,N-dimethyl-propylene diamine with tall oil. The modified amine catalyst is generally included in the polyol component of the polyurethane-forming reaction mixture. The modified amine catalyst is generally used in an amount of from about 1 to about 5% by weight, based on total weight of the polyol component, preferably from about 2 to about 4% by weight.

It is also possible to use the modified amine catalyst of the present invention in combination with other known catalysts. Where catalysts in addition to the required modified amine catalyst are used, it may be necessary to adjust the amount of modified amine catalyst employed. Usually, less modified amine catalyst will be required when another catalyst is employed.

Other known auxiliaries and additives may, of course, also be used in the production of foams in accordance with the process of the present invention. Examples of such optional additives include readily volatile organic substances which act as blowing agents; known reaction accelerators; known reaction retarders; surface-active additives, such as emulsifiers and foam stabilizers; known cell regulators such as paraffins, fatty alcohols and dimethyl polysiloxanes; pigments or dyes; known flameproofing agents such as trischloroethyl phosphate and tricresyl phosphate; stabilizers against the effects of ageing and weathering; plasticizers; fungistatic and bacteriostatic agents; and fillers such as barium sulfate, kieselguhr, carbon black and whiting, nano powders, etc. These optional additives may be used in their typically used quantities.

Specific examples of appropriate optional auxiliaries and additives are described, for example, in German Offenlegungsschrift 27 32 292, pages 21 to 24.

Further examples of surface-active additives and foam stabilizers, cell regulators, reaction retarders, stabilizers, flameproofing agents, plasticizers, dyes, fillers, fungistatic and bacteriostatic agents which may optionally be used in the process of the present invention and information on the use of such additives and their mode of action can be found in Kunststoff-Handbuch, Vol. VII, edited by Vieweg and Hochtlen, Carl-Hanser-Verlag, Munchen 1966, for example on pages 103 to 113.

The foam produced in accordance with the present invention is produced by mixing the polyol component with the polyisocyanate component, generally in a ratio by weight of polyol to isocyanate of from about 100:150 to about 100:200 depending on the target density and water contents and preferably in a ratio by weight of approximately 100:180 if target density is 25 Kg/m3. This mixing is typically carried out in a low-pressure foaming machine such as that which is available from under the designation Hennecke HK-5000 or Cannon C 300. A foam slab is produced discontinuously by pouring the foamable mixture into a large box having a base area which corresponds to that of the article to be formed therefrom, e.g., a car roof. The foams produced in accordance with the present invention generally have a density of from about 22 to about 30 kg/m³ and preferably about 25 kg/m³. Approximately 50 kg of the polyurethane-forming reaction mixture are required for the production of a foam slab measuring 180 x 140 x 70 cm³. The foamable mixture is activated so that the foaming reaction begins after about 60 seconds, as measured from the emergence of the first amount from the mixing head (cream time). After about 200 seconds, the foam sets and, after about 260 seconds, the blow-out process begins, i.e. the sudden evaporation of a mixture of steam and CO₂, leaving a number of small craters on the surface of the slab. This blow-out process is the outward sign that the foam cells have opened.

The foams produced in accordance with the process of the present invention are open-celled foams (60-94% by volume, ASTM-D-1940-42T) which are elastic and formable at room temperature. These foams may be used for the production of car roofs and glove compartments having complicated shapes. The foams of the present invention have glass transition temperatures of approximately 150°C and, hence, high heat resistance. These foams are sufficiently rigid that the warm moldings can be removed without damage from the mold which has been heated at 130° to 140°C. In addition, the foams have almost no resilience, so that edges which are tightly compressed to different extents retain their cross-section. This compression retention ensures an exact fit of the parts required during installation.

Particulars of a preferred foam formulation and of processing both to the foam and to car headliners and the physical properties of the resultant foam are given in the following Examples.

### EXAMPLES

The materials used in the Examples were as follows:
- POLYOL A:: A glycerin-initiated polyether polyol having a functionality of 3 and a molecular weight of approximately 6000.
- POLYOL B:: A propylene glycol initiated polyether polyol having a functionality of 2 and a molecular weight of 218.
- POLYOL C:: A glycerin-initiated polyether polyol having a functionality of 3 and a molecular weight of 358.
- PU 1748:: Modified amine catalyst which is the reaction product of tall oil with N,N-dimethyl-propylene diamine which is commercially available from Bayer MaterialScience under the name Zusatzmittel VP PU1748.
- SURF:: A silicone surfactant.
- GLY:: Glycerin.
- PIG:: A black paste.
- H₂O:: Water, the blowing agent.
- ISO:: A mixture of diphenylmethane diisocyanate (MDI) and polymeric MDI having an NCO content of 32.4% and a functionality of approximately 2.4.
- IGEPAL:: Nanylphenol ethoxylate
- Y-10941:: Silicone cell opening surfactant

### EXAMPLES 1-3

The materials listed in TABLE 1 were combined in the amounts indicated below in Table 1. The polyols and additives were combined to form the polyol component before being combined with the polyisocyanate. All amounts are reported in parts by weight.

**TABLE 1**

| Example | 1 | 2 | 3 |
|---|---|---|---|
| POLYOL A | 36.32 | 36.3 | 36.3 |
| POLYOL B | 28 | 28 | 18.4 |
| POLYOL C | 18.4 | 18.4 | 28 |
| GLY | 7.6 | 10 | 7.6 |
| PU 1748 | 3 | 3 | 3 |
| SURF | 0.5 | 0.5 | 0.5 |
| PIG | 0.6 | 0.6 | 0.6 |
| H₂O | 5.65 | 5.65 | 5.65 |
| ISO | 172.1 | 179.9 | 173.0 |
| Odor | none | none | none |

### EXAMPLES 4-17

The materials listed in TABLE 2 were combined in the amounts indicated below in Table 2. The polyols and additives were combined to form the polyol component before being combined with the polyisocyanate. All amounts are reported in parts by weight.

**TABLE 2**

| Ex. | 4 | 5 | 6 | 7 | 8 | 9 | 10 | 11 | 12 | 13 | 14 | 15 | 16 | 17 |
|---|---|---|---|---|---|---|---|---|---|---|---|---|---|---|
| POLYOL A | 45.2 | 47 | 42 | 47.2 | 47.2 | 47.2 | 47.2 | 47.2 | 47.2 | 47.2 | 47.2 | 47.2 | 47.5 | 36.25 |
| POLYOL B | 0 | 0 | 0 | 0 | 0 | 0 | 0 | 0 | 0 | 0 | 0 | 0 | 0 | 28 |
| POLYOL C | 30 | 30 | 30 | 30 | 33.3 | 33 | 33 | 33 | 33 | 33 | 33 | 33 | 33 | 18.4 |
| GLY | 15 | 13 | 13 | 10 | 10 | 10 | 10 | 10 | 10 | 10 | 10 | 10 | 10 | 7.6 |
| PU 1748 | 3 | 3.5 | 3.5 | 3.3 | 3.3 | 3.3 | 3.3 | 3.3 | 3.3 | 3.3 | 3.3 | 3.3 | 3.0 | 3.0 |
| SURF | 0.5 | 0.3 | 0.3 | 0.3 | 0 | 0.2 | 0 | 0.2 | 0.3 | 0.5 | 0.7 | 0.12 | 0.2 | 0.5 |
| IGEPAL | 0 | 0 | 5 | 3 | 0 | 0 | 0 | 0 | 0 | 0 | 0 | 0 | 0 | 0 |
| PIG | 0.6 | 0.6 | 0.6 | 0.6 | 0.6 | 0.6 | 0.6 | 0.6 | 0.6 | 0.6 | 0.6 | 0.6 | 0.6 | 0.6 |
| Y-10941 | 0 | 0 | 0 | 0 | 0 | 0 | 0.2 | 0.2 | 0.1 | 0.1 | 0.1 | 1.41 | 0.2 | 0 |
| H₂O | 5.65 | 5.65 | 5.65 | 5.65 | 5.65 | 5.65 | 5.65 | 5.65 | 5.65 | 5.65 | 5.65 | 5.65 | 5.65 | 5.65 |
| ISO | 185.3 | 176.8 | 177.5 | 179.9 | 184.3 | 167.3 | 167.3 | 167 | 167.3 | 183.3 | 175 | 173.3 | 179.1 | 186.9 |
| Odor | none | none | none | none | none | none | none | none | none | none | none | none | none | none |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A water-blown polyurethane foam which is the reaction product of
(a) an organic polyisocyanate with
(b) a polyol component comprising:
(i) a polyether polyol having a functionality of from about 2 to about
6 and a molecular weight of from about 160 to about 6000, in the presence of
(c) from about 1 to about 9% by weight, based on total weight of (b), (c) and (d) of water and
(d) from about 0.5 to about 8% by weight, based on total weight of (b), (c) and (d) of a modified amine catalyst.

2. The foam of Claim 1 in which (a) comprises a mixture of polyisocyanates which is made up of from about 30 to about 80% by weight diphenyl methane diisocyanate and from about 20 to about 70% by weight polyphenyl polymethylene polyisocyanate.

3. The foam of Claim 1 in which (b) comprises from about 70 to about 90% by weight of a difunctional and/or trifunctional hydroxyl polyether having an OH value of from about 28 to about 1050.

4. The foam of Claim 2 in which the diphenylmethane diisocyanate includes from about 10 to about 30% by weight of 2,4'-diphenylmethane diisocyanate.

5. The foam of Claim 1 in which (b) comprises a mixture of
(i) from about 30 to about 50% by weight, based on total weight of (b), short chained polyether having an OH number of from about 450 to about 1050 and
(ii) from about 25 to about 40% by weight, based on total weight of component (b), long-chained polyether having an OH number of from about 28 to about 34.

6. The foam of Claim 5 in which (d) comprises a reaction product of tall oil and N,N-dimethyl-propylene diamine.

7. The foam of Claim 1 in which (d) comprises a reaction product of tall oil and N,N-dimethyl-propylene diamine.

8. A reaction mixture for the production of a water-blown polyurethane foam comprising:
(a) an organic polyisocyanate,
(b) a polyol component comprising:
(i) a polyether polyol having a functionality of from 2 to 6 and a molecular weight of from about 160 to about 6000,
(c) from about 1 to about 9% by weight, based on total weight of (b), (c) and (d) of water and
(d) from about 0.5 to about 8% by weight, based on total weight of (b), (c) and (d) of a modified amine catalyst.

9. The reaction mixture of Claim 8 in which (a) comprises a mixture of polyisocyanates which is made up of from about 30 to about 80% by weight diphenyl methane diisocyanate and from about 20 to about 70% by weight polyphenyl polymethylene polyisocyanate.

10. The reaction mixture of Claim 8 in which (b) comprises from about 15 to about 35% by weight of a difunctional and/or trifunctional hydroxyl polyether having an OH value of from about 28 to about 1050.

11. The reaction mixture of Claim 9 in which the diphenyhnethane diisocyanate includes from about 10 to about 30% by weight of 2,4'-diphenylmethane diisocyanate.

12. The reaction mixture of Claim 8 in which (b) comprises a mixture of
(i) from about 30 to about 50% by weight, based on total weight of (b), short chained polyether having an OH number of from about 450 to about 1050 and
(ii) from about 25 to about 40% by weight, based on total weight of component (b), long-chained polyether having an OH number of from about 28 to about 34.

13. The reaction mixture of Claim 12 in which (d) comprises a reaction product of tall oil and N,N-dimethyl-propylene diamine.

14. The reaction mixture of Claim 8 in which (d) comprises a reaction product of tall oil and N,N-dimethyl-propylene diamine.
